(19) Europäisches Patentamt
European Patent Office
Office européen des brevets

(11) **EP 2 318 730 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(21) Anmeldenummer: **09777445.9**

(22) Anmeldetag: **27.07.2009**

(51) Int Cl.:
**F16D 65/56** (2006.01)

(86) Internationale Anmeldenummer:
**PCT/EP2009/005410**

(87) Internationale Veröffentlichungsnummer:
**WO 2010/012428 (04.02.2010 Gazette 2010/05)**

(54) **NACHSTELLVORRICHTUNG FÜR EINE SCHEIBENBREMSE**

ADJUSTING DEVICE FOR A DISK BRAKE

DISPOSITIF D'AJUSTEMENT POUR FREIN À DISQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.07.2008 DE 102008035367**

(43) Veröffentlichungstag der Anmeldung:
**11.05.2011 Patentblatt 2011/19**

(73) Patentinhaber: **Knorr-Bremse Systeme für Nutzfahrzeuge GmbH**
**80809 München (DE)**

(72) Erfinder:
• **IRASCHKO, Johann**
**85301 Schweitenkirchen (DE)**

• **KEMPINGER, Georg**
**85386 Eching (DE)**
• **ORGLER, Florian**
**80335 München (DE)**

(74) Vertreter: **Mattusch, Gundula**
**C/o Knorr-Bremse AG**
**Moosacherstrasse 80**
**80809 München (DE)**

(56) Entgegenhaltungen:
DE-A1- 3 341 059      DE-A1- 3 410 249
DE-A1- 3 615 985      DE-A1-102004 037 771
DE-A1-102006 007 684

**Beschreibung**

Die Erfindung betrifft eine Nachstellvorrichtung für eine Scheibenbremse, insbesondere pneumatisch betätigte Scheibenbremse, nach dem Oberbegriff des Anspruchs 1.

Nachstellvorrichtungen für Scheibenbremsen gibt es in unterschiedlichen Ausführungen. Aus der DE 10 2004 037 771 A1 ist eine Nachstellvorrichtung für eine Scheibenbremse bekannt, wobei hier auf diese Schrift vollinhaltlich Bezug genommen wird. Sie ist für eine pneumatisch betätigte Scheibenbremse, insbesondere in Schiebesattelausführung, geeignet. Weiterhin ist sie aber auch in pneumatisch betätigten Fest- oder Schwenksattelscheibenbremsen verwendbar.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1. Die Kolbenhübe der Bremszylinder bewegen sich zwischen 50 und 75 mm, damit ergeben sich Zuspannwege zum Andrücken der Bremsbeläge an die Bremsscheibe von etwa 4 mm.

Die Reibmaterialdicke der Bremsbeläge liegt im Bereich von 20 mm, da 2 Beläge eingebaut sind ergibt sich somit, ohne Berücksichtigung des Scheibenverschleißes, ein Verschleißweg von etwa 40 mm. Dieser Weg ist um ein Vielfaches größer als der o. e. Zuspannweg. Es besteht daher die Notwendigkeit die Bremse mittels einer Vorrichtung, dem Belagverschleiß entsprechend, nachzustellen. Stand der Technik ist eine automatisch arbeitende Verschleißnachstellung, damit wird erreicht, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (z. B.: Schaltfinger, Zahnrad) vom Bremshebel angetrieben wird. Bei einem Bremsvorgang führt der mit der Kolbenstange des Bremszylinders gekoppelte Bremshebel eine Drehbewegung aus. Bevor über den Koppelmechanismus der Nachstellung (z. B.: Schaltgabel und Schaltfinger oder Zahnräder) die Drehbewegung des Hebels in den Nachsteller eingeleitet wird, muss ein so genannter Leerweg überwunden werden. Dieser Weg ist für die Größe des so genannten Lüftspiels ausschlaggebend, da während dieser Bewegung die Nachstellung nicht aktiviert wird, und der Zuspannweg damit das Lüftspiel darstellt. Nach Überwinden dieses Leerwegs wird der Nachsteller in eine Drehbewegung versetzt, und durch die Koppelung mit dem Gewindestempel bzw. -rohr wird ein Nachstellvorgang eingeleitet.

Die DE 10 2004 037 711 A1 beschreibt einen solchen Nachsteller, der in Fig. 5 gezeigt ist. Er besteht im Wesentlichen aus folgenden Funktionselementen:

- Welle 2
- Lagerscheibe 3
- Axiallager 5
- Bundbuchse, bzw. Distanzhülse 19
- Schaltgabel, bzw. Antriebsring 6
- Kugelrampenkupplung 7
- Konuskupplung 17
- Zylinderfeder 12

Hinsichtlich der Beschreibung wird auf die DE 10 2004 037 711 A1 verwiesen.

Ein wichtiges Element des Nachstellers ist die Richtungskupplung. Diese Funktion ergibt sich aus dem Zusammenspiel der Kugelrampenkupplung 7 und der Konuskupplung 17.

Vom Bremshebel wird eine Drehbewegung in die Schaltgabel mit dem Antriebsring 6 und in die Kugelrampenkupplung 7 des Nachstellers eingeleitet. Die dabei in der Kugelrampenkupplung 7 erzeugte Axialkraft bewirkt in der Konuskupplung 17 ein vom Reibwert, Kegelwinkel und Reibradius abhängiges Reibmoment.

Damit es nicht zum Durchrutschen der Konuskupplung 17 kommt, muss wie bei allen reibungsabhängigen Freilaufsystemen die Bedingung der Selbsthemmung erfüllt sein, d.h. die erzeugte Reibkraft bzw. das erzeugte Reibmoment muss größer sein als die zu übertragende Kupplungskraft bzw. das zu übertragende Kupplungsmoment:

$$M_{Konuskupplung} > M_{Rampenkupplung}$$

Im Lauf der Entwicklung hat sich gezeigt, dass die Auslegung der Konuskupplung 17 innerhalb der gegeben Randbedingungen sehr problematisch ist.

Damit auch bei sehr geringen Reibwerten (ca. 0,07) in der Konuskupplung 17 eine sichere Klemmwirkung gegeben ist, ist es erforderlich, die Konuskupplung 17 mit einem relativ steilen Kegelwinkel $\alpha_K$ auszuführen. Das Problem dabei ist das Löseverhalten in axialer Richtung. Bei längerem Betrieb kann es vorkommen, dass die Konuskupplung 17 bei Entlastung nicht mehr löst und als Folge die Freilauffunktion nicht mehr gegeben ist.

Die Aufgabe der vorliegenden Erfindung besteht daher darin, eine Nachstellvorrichtung mit einer Konuskupplung bereitzustellen, wobei die obigen Nachteile entfallen bzw. bedeutend verringert und weitere Vorteile geschaffen sind.

Die Aufgabe wird durch eine Nachstellvorrichtung mit den Merkmalen des Anspruchs 1 gelöst. Die Aufgabe wird auch durch eine Scheibenbremse mit den Merkmalen des Anspruchs 7 gelöst.

Demgemäß ist eine Nachstellvorrichtung zur Nachstellung eines Verschleißes von Bremsbelägen und Bremsscheibe einer pneumatisch betätigten Scheibenbremse mit einer drehhebelbetätigten Zuspannvorrichtung, die vorzugsweise in eine Stellspindel der Scheibenbremse einsetzbar ist, wobei axial auf einer Seite eines Antriebsrings ein Axiallager und axial auf der gegenüberliegenden Seite des Antriebsrings eine Kugelrampenkupplung mit Freilauffunktion ausgebildet ist; die Kugelrampenkupplung Kugeln, eine axial zwischen dem Axiallager und ihren Kugeln antriebsseitig angeordneten Antriebsbuchse und einen abtriebsseitigen Kupplungsring aufweist, eine Konuskupplung zwischen dem abtriebsseitigen Kupplungsring und einer Federhülse für eine Zylinderfeder angeordnet ist, dadurch gekennzeichnet, dass die Konuskupplung den abtriebsseitigen Kupplungsring und eine mit der Federhülse verbundene Kegelbuchse aufweist, und zwischen dem abtriebsseitigen Kupplungsring und der Kegelbuchse Klemmkugeln angeordnet sind.

Die Konuskupplung ist mit Klemmkugeln ausgestattet. Mit den Klemmkugeln wird erreicht, dass sich die innere Kegelbuchse in axialer Richtung ohne nennenswerte Reibhemmung aufgrund der Rollbewegung der Kugeln bewegen kann. Durch die Lagerung der Kugeln in axial verlaufenden Längsrillen, wird erreicht, dass in tangentialer Richtung hingegen eine auf Reibung basierende Sperrwirkung vorhanden ist.

Diese Konstruktion bietet folgende Vorteile:

- Einwandfreies Löseverhalten in axialer Richtung auch bei sehr kleinen Kegelwinkeln
- Hohe Reibwirkung in tangentialer Richtung
- Durch die Lagerung der Kugeln in Rillen wird erreicht, dass zwischen Kugeln und Gegenfläche eine Linienberührung und somit eine relativ günstige Hertz'sche Pressung vorhanden ist.
- Kostengünstige Herstellung der Teile durch spanlose Umformtechnik
- Bauraum sparender Aufbau

Vorteilhafte Ausbildungen sind in den Unteransprüchen angegeben.

Es ist in einer Ausführung vorgesehen, dass die Kegelbuchse ein Außenprofil aufweist, welches zu einem Innenprofil der Federhülse für eine drehfeste Verbindung korrespondiert. Dadurch wird ein einfacher Zusammenbau möglich, wobei gleichzeitig eine formschlüssige Drehverbindung geschaffen ist.

In einer alternativen Ausführung können die Kegelbuchse und die Federhülse einstückig ausgebildet sein, wodurch eine Teileanzahl und Montagezeiten verringert werden.

In einer weiteren Ausführung ist vorgesehen, dass das Axiallager durch die eine Seite des Antriebsrings, Wälzkörper und einen Bund einer Bundbuchse, welche sich axial durch die Kugelrampenkupplung hindurch erstreckt, ausgebildet ist. Damit wird ebenfalls eine Teilevielfalt reduziert und ein kompakter Aufbau erzielt.

Es ist weiterhin vorgesehen, dass ein Ende der sich durch die Kugelrampenkupplung hindurch erstreckenden Bundbuchse direkt oder über eine Druckscheibe einen axialen Anschlag für die Kegelbuchse bildet. Dadurch wird ein einfacher Zusammenbau und Zusammenhalt sowie ein minimales Spiel von Axiallager und Kugelrampenkupplung ermöglicht und beibehalten.

Eine Scheibenbremse, insbesondere pneumatisch betätigte Scheibenbremse, weist eine Nachstellvorrichtung nach der oben stehenden Beschreibung auf.

Die Erfindung wird nun anhand einer beispielhaften Ausführung mit Bezug auf die beigefügten Zeichnungen näher erläutert. Hierbei zeigen:

Fig. 1     eine Prinzipskizze zur Reibwirkung an einem Konus;

Fig. 2     eine Teilschnittdarstellung einer beispielhaften Ausführung einer erfmdungsgemäßen Nachstellvorrichtung;

Fig. 3     eine vergrößerte Teilschnittdarstellung des oberen Bereiches nach Fig. 2;

Fig. 4     eine perspektivische beispielhafte Darstellung einer Kegelbuchse;

Fig. 5     eine Teilschnittdarstellung einer Nachstellvorrichtung nach dem Stand der Technik; und

Fig. 6     eine schematische Darstellung einer Scheibenbremse.

Elemente mit gleichen oder ähnlichen Funktionen sind in den Figuren mit gleichen Bezugszeichen versehen.

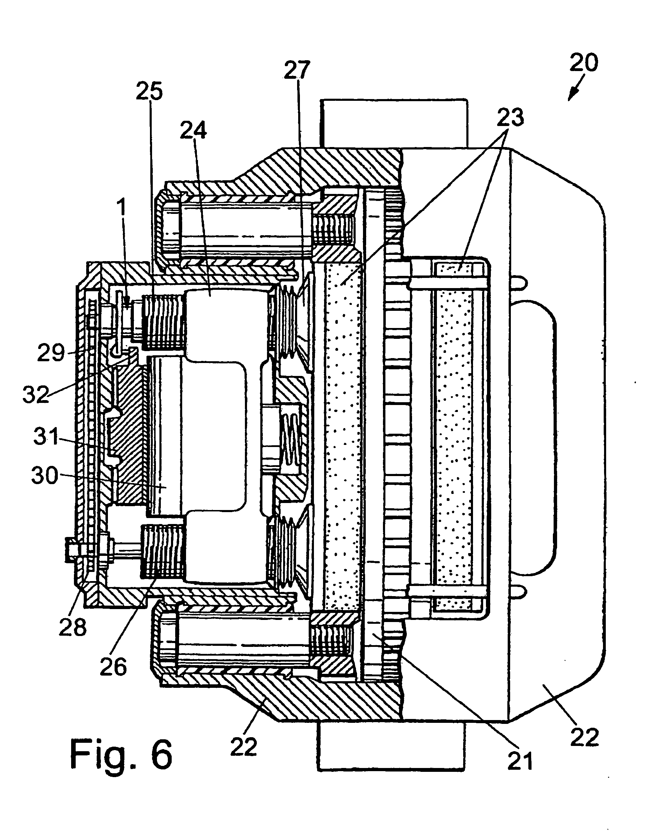

Zu Aufbau und Funktion einer pneumatischen Scheibenbremse nach Fig. 6 wird auf die entsprechende Beschreibung der DE 197 29 024 C1 verwiesen. In der Fig. 6 sind hier die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 wäre auch für eine elektromotorisch betätigte Scheibenbremse geeignet.

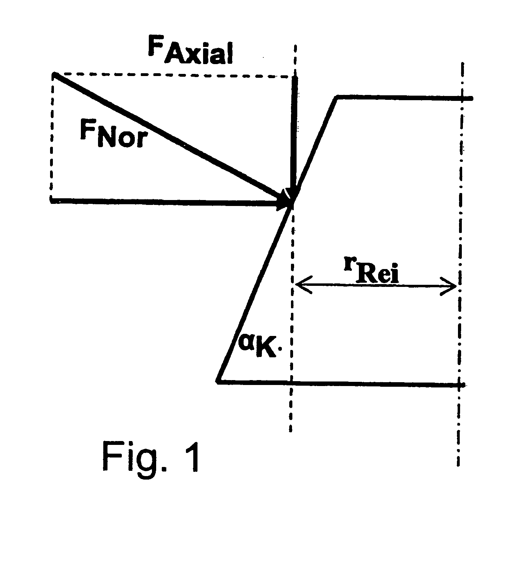

Dazu wird Bezug auf Fig. 1, 2 und 3 genommen.

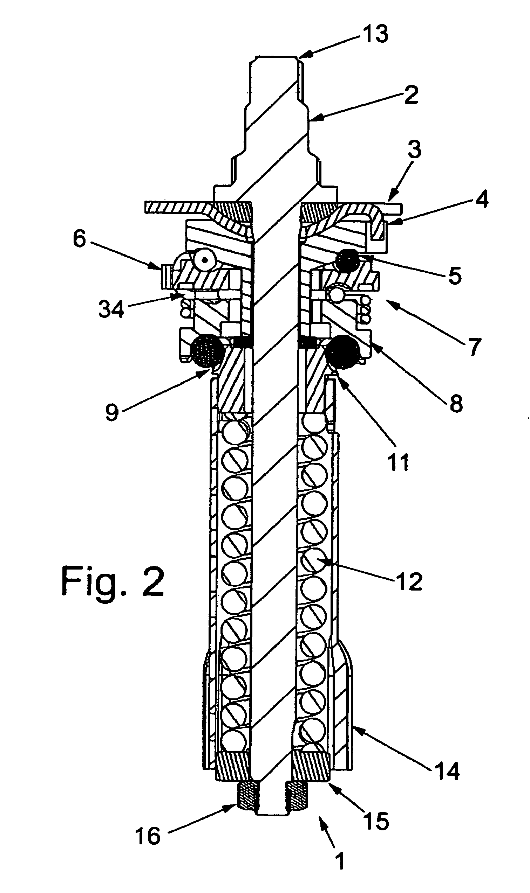

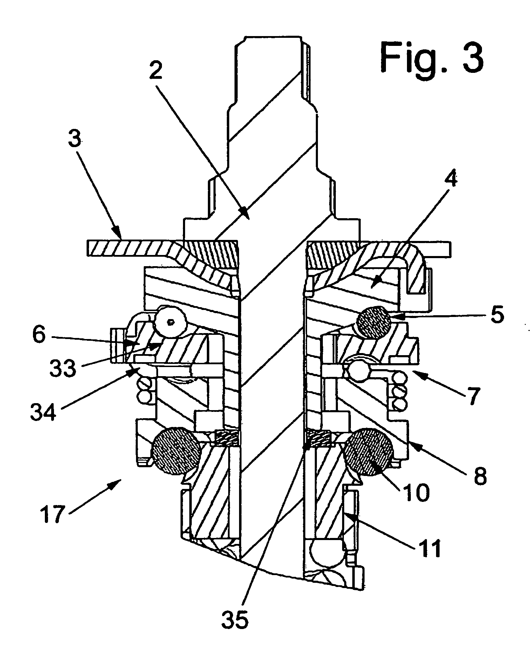

Fig. 1 ist eine Prinzipskizze zur Reibwirkung an einem Konus und Fig. 2 zeigt eine Teilschnittdarstellung einer beispielhaften Ausführung einer erfindungsgemäßen Nachstellvorrichtung 1. Fig. 3 illustriert eine vergrößerte Teilschnittdarstellung des oberen Bereiches nach Fig. 2.

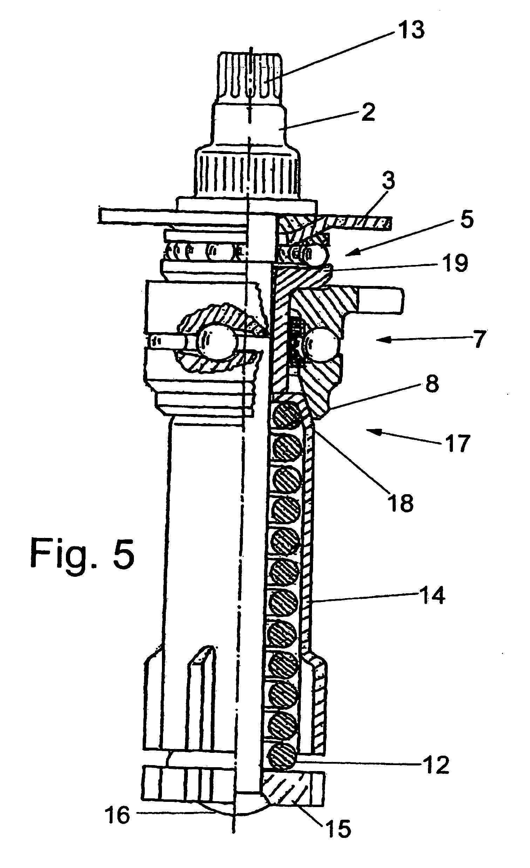

Die Nachstellvorrichtung 1 weist Folgendes auf: eine Welle 2, mit einem Antriebszapfen an ihrem oberen Ende; eine Lagerscheibe 3 zur Befestigung der Nachstellvorrichtung 1 im Bremssattel 22 (siehe Fig. 6); eine Bundbuchse 4, die verdrehsicher mit der Lagerscheibe 3 gekoppelt ist und einen oberen Bund mit einer darunter angeordneten Laufflä che für Kugeln eines Axiallagers 5 aufweist; einen (Schaltgabel-) Antriebsring 6, der mit einer Schaltgabel verbunden ist, die mit dem Antriebselement 32 (siehe Fig. 6) des Drehhebels 31 gekoppelt ist; eine Kugelrampenkupplung 7, mit einem Kupplungsring 8, welcher mit einer Kegelbuchse 11 zusammenwirkt, die mit einer Federhülse 14 drehfest verbunden ist; eine Zylinderfeder 12, die in der Federhülse 14 angeordnet ist und sich auf einer Profilscheibe 15 abstützt; und ein Einstellelement 16, zum Beispiel eine Mutter, die auf dem unteren Ende der Welle 2 angeordnet ist und zum Spannen der Zylinderfeder 12 und zum axialen Zusammenhalt der Elemente der Nachstellvorrichtung 1 dient. Die Kugelrampenkupplung 7 besteht aus einer Antriebbuchse 33, welche ein unterer Abschnitt des Antriebsrings 6 ist, Kugeln bzw. Wälzkörpern und dem Kupplungsring 8, wobei der Kupplungsring 8 einen oberen Abschnitt zur Aufnahme der Kugeln und einen unteren Abschnitt aufweist, der einen Teil der Konuskupplung 17 bildet. Die allgemeine Funktion der Nachstellvorrichtung 1 wird in DE 10 2004 037 771 A1 mit Bezug auf Fig. 5 ausführlich beschrieben, worauf hier verwiesen wird.

Als ein erster Unterschied zu der Nachstellvorrichtung nach Fig. 5 ist bei der Nachstellvorrichtung 1 gemäß der vorliegenden Erfindung das Axiallager 2 aus dem Bund der Bundbuchse 4, einer Seite des Antriebsrings 4 und Wälzkörpern gebildet. Das untere Ende der sich durch die Kugelrampenkupplung 7 hindurch erstreckenden Bundbuchse 4 bildet direkt oder über eine Druckscheibe 35 einen axialen Anschlag für die Kegelbuchse 9. Die Kegelbuchse 11 wird über die Federhülse 14 von der Zylinderfeder 12 nach oben gepresst, wobei die Komponenten Konuskupplung 17, Kugelrampenkupplung 7 und Axiallager 5 axial zusammengehalten und zusammengedrückt werden. Die Bundbuchse 4 mit ihrem Anschlag dient dazu, ein Minimalspiel der Lagerungen beizubehalten.

Ein bedeutender Unterschied zum Stand der Technik besteht darin, dass die Konuskupplung 17 als eine Kugel-Konuskupplung ausgebildet ist.

Die Konuskupplung gewährleistet in Umfangsrichtung eine hohe Klemmsicherheit und in axialer Richtung ein einwandfreies Löseverhalten.

Um eine hohe Klemmsicherheit in Umfangsrichtung zu erreichen ist bei einer Konuskupplung ein möglichst kleiner Kegelwinkel $\alpha_K$ erforderlich. Hierzu dient Fig. 1 zur Erläuterung. Dadurch wird erreicht, dass die auf die Reibfläche wirkende Normalkraft $F_{Norm}$ möglichst groß ist. Es gilt der Zusammenhang:

$$F_{Norm} = F_{Axial} / \cos \alpha_K.$$

Da für die Reibkraft der Zusammenhang gilt:

$$F_{Reib} = F_{Norm} \times \mu$$

kann so in Verbindung mit dem Reibradius ein hohes Reibmoment erzeugt werden.

Wie in Fig. 3 dargestellt, ist die Konuskupplung 17 mit Klemmkugeln 10 ausgestattet. Mit den Klemmkugeln 10 wird erreicht, dass die innere Kegelbuchse 11 in axialer Richtung sich ohne nennenswerte Reibhemmung aufgrund der Rollbewegung der Klemmkugeln 10 bewegen kann. Durch die Lagerung der Klemmkugeln in axial längs verlaufenden Kugelrillen 9 wird erreicht, dass in tangentialer Richtung hingegen eine auf Reibung basierende Sperrwirkung vorhanden ist.

Diese Konstruktion bietet folgende Vorteile:

- Einwandfreies Löseverhalten in axialer Richtung auch bei sehr kleinen Kegelwinkeln
- Hohe Reibwirkung in tangentialer Richtung
- Durch die Lagerung der Klemmkugeln 10 in Kugelrillen 9 wird erreicht, dass zwischen Klemmkugeln 10 und Gegenfläche eine Linienberührung und somit eine relativ günstige Hertz'sche Pressung vorhanden ist.
- Kostengünstige Herstellung der Teile durch spanlose Umformtechnik

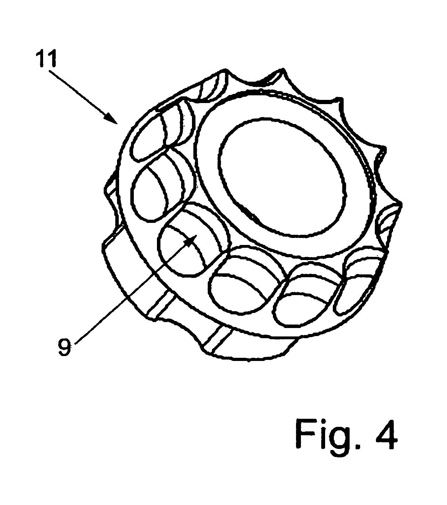

Fig. 4 illustriert eine Kegelbuchse 11 mit Kugelrillen 9 in perspektivischer Darstellung.

Die Kegelbuchse 11 weist in diesem Beispiel an ihrer der Konuskupplung 17 abgewandten Seite eine radiale Profilierung auf, welche zu formschlüssigen Aufnahme in dem oberen Ende der Federhülse 14 dient. Somit ist eine einfache Montage gewährleistet.

Die Erfindung ist nicht auf die oben beschriebenen Ausführungsbeispiele beschränkt. Sie ist im Rahmen der beigefügten Ansprüche modifizierbar.

So können zum Beispiel die Kegelbuchse 11 und die Federhülse 14 einstückig ausgebildet sein.

Bezugszeichenliste

1 Nachstellvorrichtung

2 Welle

3 Lagerscheibe

| 4 | Bundbuchse |
| 5 | Axiallager |
| 6 | Antriebsring |
| 7 | Kugelrampenkupplung |
| 8 | Kupplungsring |
| 9 | Kugelrillen |
| 10 | Klemmkugel |
| 11 | Kegelbuchse |
| 12 | Zylinderfeder |
| 13 | Antriebszapfen |
| 14 | Federhülse |
| 15 | Profilscheibe |
| 16 | Einstellelement |
| 17 | Konuskupplung |
| 18 | Hülsenkonus |
| 19 | Distanzhülse |
| 20 | Scheibenbremse |
| 21 | Bremsscheibe |
| 22 | Bremssattel |
| 23 | Bremsbeläge |
| 24 | Traverse |
| 25 | Erste Stellspindel |
| 26 | Zweite Stellspindel |
| 27 | Druckstück |
| 28 | Kettenräder |
| 29 | Kette |
| 30 | Exzenter |
| 31 | Drehhebel |
| 32 | Antriebselement |

| 33 | Antriebsbuchse |
| 34 | Kugel |

**Patentansprüche**

1. Nachstellvorrichtung (1) zur Nachstellung eines Verschleißes von Bremsbelägen (23) und Bremsscheibe (21) einer pneumatisch betätigten Scheibenbremse (20) mit einer drehhebelbetätigten Zuspannvorrichtung, die vorzugsweise in eine Stellspindel (25) der Scheibenbremse (20) einsetzbar ist, wobei

    (a) axial auf einer Seite eines Antriebsrings (6) ein Axiallager (5) und axial auf der gegenüberliegenden Seite des Antriebsrings (6) eine Kugelrampenkupplung (7) mit Freilauffunktion ausgebildet ist;
    (b) die Kugelrampenkupplung (7) Kugeln (34), eine axial zwischen dem Axiallager (5) und ihren Kugeln (34) antriebsseitig angeordnete Antriebsbuchse (33) und einen abtriebsseitigen Kupplungsring (8) aufweist,
    (c) eine Konuskupplung (17) zwischen dem abtriebsseitigen Kupplungsring (8) und einer Federhülse (14) für eine Zylinderfeder (12) angeordnet ist,
    **dadurch gekennzeichnet, dass**
    (d) die Konuskupplung (17) den abtriebsseitigen Kupplungsring (8) und eine mit der Federhülse (14) verbundene Kegelbuchse (11) aufweist, und
    (e) zwischen dem abtriebsseitigen Kupplungsring (8) und der Kegelbuchse (11) Klemmkugeln (10) angeordnet sind.

2. Nachstellvorrichtung (1) nach Anspruch 1, **dadurch gekennzeichnet, dass** die Kegelbuchse (11) im Wesentlichen axial verlaufende Kugelrillen (9) zur Aufnahme der Klemmkugeln (10) aufweist.

3. Nachstellvorrichtung (1) nach Anspruch 1 oder 2, **dadurch gekennzeichnet, dass** die Kegelbuchse (11) ein Außenprofil aufweist, welches zu einem Innenprofil der Federhülse (14) für eine drehfeste Verbindung korrespondiert.

4. Nachstellvorrichtung (1) nach Anspruch 1 oder 2, **dadurch gekennzeichnet, dass** die Kegelbuchse (11) und die Federhülse (14) einstückig ausgebildet sind.

5. Nachstellvorrichtung (1) nach einem der vorhergehenden Ansprüche, **dadurch gekennzeichnet, dass** das Axiallager (5) durch die eine Seite des Antriebsrings (6), Wälzkörper und einen Bund einer Bundbuchse (4), welche sich axial durch die Kugelrampenkupplung (7) hindurch erstreckt, ausgebildet ist.

6. Nachstellvorrichtung (1) nach Anspruch 5, **dadurch gekennzeichnet, dass** ein Ende der sich durch die Kugelrampenkupplung (7) hindurch erstreckenden Bundbuchse (4) direkt oder über eine Druckscheibe (35) einen axialen Anschlag für die Kegelbuchse (9) bildet.

7. Scheibenbremse (20), insbesondere pneumatisch betätigte Scheibenbremse, mit einer Nachstellvorrichtung (1) nach einem der vorhergehenden Ansprüche.

**Claims**

1. Adjusting device (1) for adjusting for wear of the brake pads (23) and the brake disc (21) of a pneumatically actuated disc brake (20) having a rotary-lever-actuated brake application device, which adjusting device can preferably be inserted into a control spindle (25) of the disc brake (20), wherein

(a) a thrust bearing (5) is formed axially on one side of a drive ring (6) and a ball ramp clutch (7) with freewheel function is formed axially on the opposite side of the drive ring (6);
(b) the ball ramp clutch (7) has balls (34), a drive bush (33) arranged at the drive input side axially between the thrust bearing (5) and the balls (34) thereof and a drive-output-side clutch ring (8),
(c) a cone clutch (17) is arranged between the drive-output-side clutch ring (8) and a spring sleeve (14) for a cylindrical spring (12),
**characterised in that**
(d) the cone clutch (17) has the drive-output-side clutch ring (8) and a tapered bush (11) which is connected to the spring sleeve (14), and
(e) clamping balls (10) are arranged between the drive-output-side clutch ring (8) and the tapered bush (11).

2. Adjusting device (1) according to claim 1, **characterised in that** the tapered bush (11) has substantially axially extending ball grooves (9) for receiving the clamping balls (10).

3. Adjusting device (1) according to claim 1 or 2, **characterised in that** the tapered bush (11) has an external profile which corresponds to an internal profile of the spring sleeve (14) for a non-rotatable connection.

4. Adjusting device (1) according to claim 1 or 2, **characterised in that** the tapered bush (11) and the spring sleeve (14) are formed in one piece.

5. Adjusting device (1) according to any of the preceding claims, **characterised in that** the axial bearing (5) is formed by one side of the drive ring (6), by rolling bodies and by a collar of a collar bush (4) which extends axially through the ball ramp clutch (7).

6. Adjusting device (1) according to claim 5, **characterised in that** one end of the collar bush (4) which extends through the ball ramp clutch (7) forms, directly or via a thrust washer (35), an axial stop for the tapered bush (9).

7. Disc brake (20), in particular pneumatically actuated disc brake, having an adjusting device (1) according to any of the preceding claims.

**Revendications**

1. Dispositif (1) de rattrapage de jeu pour le rattrapage de jeu d'une usure de garniture (23) de frein et de disque (21) de frein d'un frein (20) à disque actionné pneumatiquement, comprenant un dispositif de serrage actionné par un levier tournant, qui peut être inséré, de préférence, dans une broche (25) de réglage du frein (20) à disque, dans lequel

(a) il est formé axialement d'un côté d'un anneau (6) d'entraînement un palier (5) axial et axialement du côté opposé de l'anneau (6) d'entraînement un accouplement (7) à rampe à billes à fonction de roue libre,
(b) l'accouplement (7) à rampe à billes a des billes, une douille (33) d'entraînement disposée axialement du côté de l'entraînement entre le palier (5) axial et ces billes et un anneau (8) d'accouplement du côté de la sortie,
(c) un accouplement (17) à cône est monté entre l'anneau (8) d'accouplement du côté de la sortie et un manchon (14) pour un ressort (12) cylindrique,
**caractérisé en ce que**
(d) l'accouplement (17) conique comporte l'anneau (8) d'accouplement du côté de la sortie et une douille (11) conique reliée au manchon (14) de ressort, et
(e) des billes (10) de serrage sont disposées entre l'anneau (8) d'accouplement du côté de la sortie et la douille (11) conique.

2. Dispositif (1) de rattrapage de jeu suivant la revendication 1, **caractérisé en ce que** la douille (11) conique a, pour la réception des billes (10) de serrage, des rainures (9) pour billes s'étendant sensiblement axialement.

3. Dispositif (1) de rattrapage de jeu suivant la revendication 1 ou 2, **caractérisé en ce que** la douille (11) conique a un profil extérieur qui correspond à un profil intérieur du manchon (14) pour ressort en vue d'une liaison fixe en rotation.

4. Dispositif (1) de rattrapage de jeu suivant la revendication 1 ou 2, **caractérisé en ce que** la douille (11) conique et le manchon (14) pour ressort sont d'une seule pièce.

5. Dispositif (1) de rattrapage de jeu suivant l'une des revendications précédentes, **caractérisé en ce que** le palier (5) axial est formé par l'un des côtés de l'anneau (6) d'entraînement, des pièces bombées et un collet d'une douille (4) à collet, qui traverse axialement l'accouplement (7) à rampe à billes.

6. Dispositif (1) de rattrapage de jeu suivant la revendication 5, **caractérisé en ce qu'**une extrémité de la douille '(4) à collet s'étendant dans l'accouplement (7) à rampe à billes forme directement, ou par une rondelle (35) de pression, une butée axiale pour la douille (9) conique.

7. Frein (20) à disque, notamment frein à disque actionné pneumatiquement, ayant un dispositif (1) de rattrapage du jeu suivant l'une des revendications précédentes.

Fig. 1

Fig. 2

EP 2 318 730 B1

Fig. 3

10

11

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037771 A1
- DE 102004037711 A1
- DE 19729024 C1